Europäisches Patentamt

European Patent Office

Office européen des brevets

(11) Veröffentlichungsnummer: **0 243 306**
**A1**

## (12) EUROPÄISCHE PATENTANMELDUNG

(21) Anmeldenummer: **87810215.1**

(22) Anmeldetag: **06.04.87**

(51) Int. Cl.⁴: **B 29 C 67/18**

(30) Priorität: **10.04.86 JP 82673/86**

(43) Veröffentlichungstag der Anmeldung:
**28.10.87 Patentblatt 87/44**

(84) Benannte Vertragsstaaten:
**CH DE ES FR GB LI**

(71) Anmelder: **CIBA-GEIGY AG**
**Klybeckstrasse 141**
**CH-4002 Basel (CH)**

**Asahi Kasei Kogyo Kabushiki Kaisha**
**2-6, Dojimahama 1-chome Kita-ku**
**Osaka-shi Osaka 530 (JP)**

(72) Erfinder: **Tatsumi, Takashi Asahi-Kasei Yoshimi**
**Company**
**Residence No. 321 710, Yoshimi-cho**
**Moriyama-shi Shiga (JP)**

(74) Vertreter: **Hofstetter, Marta et al**
**Patentabteilung CIBA-GEIGY AG**
**CH-4002 Basel (CH)**

(54) Einsatz zur Verwendung in Formteilen aus faserverstärktem Kunststoff, sowie solche Einsätze enthaitende Verbundartikel und Verfahren zu deren Herstellung.

(57) Ein Verbundartikel umfaßt einen aus faserverstärktem Kunststoffmaterial mit einem Durchgangsloch (4) geformten Körper (1) und einen aus mindestens zwei Segmenten (3) bestehenden Einsatz (2) mit mittiger Öffnung (7), wobei alle Segmente so in das Durchgangsloch (4) des Körpers (1) eingepaßt werden, daß sie zusammen ringförmige Gestalt mit einer aus den nach außen gerichteten Segmentwandflächen (8) bestehenden ringförmigen Umfangswandung bilden. Der mehrteilige Einsatz (2), der aus Metall, Keramik oder dergleichen bestehen kann, kann in der nach außen gerichteten Wandfläche (8) jedes seiner Segmente (3) Erhebungen (5) besitzen, die in entsprechende Ausnehmungen (10) in der Innenwandung des Durchgangsloches (4) eingreifen, oder umgekehrt. Auch kann Klebstoff verwendet werden, um die Segmente (3) mit der Wandung des Durchgangsloches (4) fester zu verbinden. Der Verbundartikel kann durch Einfügen der Einsatzsegmente (3) nacheinander in das Durchgangsloch (4) des geformten und gehärteten Formkörpers (1) hergestellt werden.

Fig. 1

EP 0 243 306 A1

# 0 243 306

**Beschreibung**

Einsatz zur Verwendung in Formteilen aus faserverstärktem Kunststoff, sowie solche Einsätze enthaltende Verbundartikel und Verfahren zu deren Herstellung.

Die Erfindung betrifft eien Einsatz zur Verwendung in Formteilen aus faserverstärktem Kunststoff, sowie solche Einsätze enthaltende Verbundartikel und Verfahren zu deren Herstellung.

Werkzeuge und dergleichen Artikel aus faserverstärkten thermoplastischen Kunststoffen erfordern bekanntlich für gewisse Zwecke die Verwendung von metallischen Einsätzen, wie dies z.B. in dem Artikel "Jointing of components molded in carbon fibre-reinforced thermoplastics" von A. P. Clubey and R. P. Scoular, "Composites", Vol. 14, Seiten 19-26, (Januar 1983) beschrieben ist.

In der GB-PS 584,004 von Sir George Godfrey and Partners Ltd. und anderen wird ein Verfahren zur Herstellung von Verbundlagern beschrieben, gemäß welchem eine Anzahl separater Lagerflächenelemente in einen Trägerkörper aus elastischem Material dicht nebeneinander und im Abstand voneinander fest eingebaut werden. Hierzu werden zunächst die einzubauenden Elemente mit Ansätzen geformt, welche als zeitweilige Halterungen dienen, die Elemente an diesen in der gewünschten Anordnung festgehalten und dann formbares Material ın plastischem Zustand zwi schen die Elemente gedrückt und mit ihnen fest verbunden, worauf die Halterungen maschinell entfernt werden, so daß ein von den Elementen umgebener mittiger Durchlaß entsteht. Dieses Verfahren ist jedoch umständlich und verlangt große Genauigkeit.

Ein weiterer bekannter Verbundgegenstand umfaßt

(a) einen Formkörper, in diesem Falle eine Hohlstange, aus faserverstärktem Kunststoff, der z.B. nach einem in der DE-OS 27 10 275 der Avions Marcel Dassault-Breguet Aviation SA, F-92420 Vaucresson und anderen am 19.9.1977 veröffentlichten Verfahren hergestellt werden kann, und

(b) einem einstückigen ringförmigen Einsatz, der in ein Durchgangsloch des Formkörpers eingepaßt und mit dessen Innenwandung verbunden ist.

Solche Verbundgegenstände werden als Bauteile in verschiedenen Geräten, Maschinen, Fahrzeugen usw. verwendet.

Vorzugsweise ist der in den bekannten Verbundgegenständen verwendete Einsatz ein einstückiges, ringförmiges metallisches Element aus Material hoher Festigkeit wie z.B. Chrommolybdänstahl hoher Festigkeit und Härte, hartem nichtrostendem Stahl und dergleichen, mit mittiger Öffnung und mit einer Umfangswandung von vorteilhafterweise zumindest annähernd kreisrundem Querschnitt.

Zum Rotieren mit hoher Geschwindigkeit geeignete wellen-oder rohrförmige Bauteile können in die Einsatzöffnung eingebaut werden, die alsdann den Vorteil hat, den geformten Verbundkörper gegen die üblichen starken Rotationskräfte zu schützen, die von der rotierenden Welle oder dergleichen auf den Einsatz ausgeübt und von diesen absorbiert werden.

Bei der praktischen Verwendung solcher Verbundgegenstände schwanken die auf den Einsatz wirkenden Rotationskräfte oft in großem Ausmaß innerhalb kurzer Zeit und unterwerfen so den Einsatz hohen maschinellen Belastungen, hohem Oberflächendruck und hoher Reibung, die weiderholt an der Innenwandung der mittigen Öffnung des Einsatzes angreifen. Während die bekannten einstückigen maschinellen Einsätze erhebliche Festigkeit gegen statische Beanspruchung aufweisen, wurde gefunden, daß sie gegenüber dynamischen oder Ermüdungsbelastungen (fatigue loads) und besonders solchen Beanspruchungen, die von Zeit zu Zeit erheblichen Schwankungen unterworfen sind, ungenügende Festigkeit aufweisen, und da der Elastizitätsmodul des Einsatzes normalerweise von demjenigen des faserverstärkten Formkörpers verschieden ist, führt dies rasch zu fortschreitender Bildung von Rissen und schließlich zum Brechen des Einsatzes. Daher kann, auch wenn der faserverstärkte Formkörper des Verbundartikels selbst hohe Bruchfestigkeit gegen Ermüdung durch Rotationskräfte aufweist, ein Brechen des Einsatzes doch schon frühzeitig eintreten und die Wirkung eines solchen Einsatzbruches führt in der Folge auch zum Brechen des faserverstärkten Formkörpers.

Nun werden die bekannten Verbundartikel häufig so hergestellt, daß zunächst der Einsatz in den Hohlraum einer Form eingeführt wird und dann faserverstärktes Formmaterial in die Form gegossen oder eingespritzt wird, häufig gefolgt von einer Wärmebehandlung zur Härtung des faserverstärkten Materials. Der erhaltene Verbundartikel wird dann abgekühlt und entformt. Ein unterschiedliches Schrumpfen des faserverstärkten Formkörpers und des Einsatzes kann leicht zum Ablösen des umgebenden faserverstärkten Körpers vom Einsatz führen.

Aufgabe der Erfindung ist daher vor allem die Verwirklichung eines neuartigen Einsatzes zur Verwendung in Verbundartikeln der vorangehend beschriebenen Art, der frei von der Gefahr eines schnellen Bruches unter Ermüdungsbelastungen ist; hierdurch soll das Anwendungsgebiet für solche Artikel erheblich vergrößert werden.

Ein weiteres Ziel der Erfindung liegt in der Verwirklichung eines Verbundartikels des eingangs beschriebenen Typs, der frei von der Gefahr eines schnellen Brechens unter Ermüdungsbelastungen ist und daher in einem größeren Anwendungsgebiet eingesetzt werden kann. Schließlich ist es noch ein Ziel der Erfindung, ein neues Verfahren zur Herstellung der eben erwähnten neuartigen Verbundartikel zu schaffen. Diese Aufgabe wird gelöst und die genannten Ziele sowie weitere, die sich aus der folgenden Beschreibung der Erfindung ergeben, werden erreicht durch einen neuen Einsatz, der im Patentanspruch 1 beschrieben ist. Vorzugsweise ist die Umfangswandung des durch mindestens zwei Segmente gebildeten Einsatzes frei von axialen Spalten zwischen den verschiedenen Segmenten.

Bevorzugte Ausführungsformen des Einsatzes nach der Erfindung weisen mindestens eines der in den Unteransprüchen 2 bis 11 beschriebenen Merkmale auf.

Die genannten Ziele werden weiter erreicht durch einen neuartigen Verbundartikel nach der Erfindung, der im Patentanspruch 12 beschrieben ist. Bevorzugte Ausführungsformen des Verbundartikels nach der Erfindung weisen mindestens eines der in den Unteransprüchen 13 bis 16 aufgeführten Merkmale auf.

Schließlich werden die genannten Ziele noch erreicht durch ein Verfahren nach der Erfindung zur Herstellung der oben beschriebenen neuartigen Verbundartikel, welches im Patentanspruch 17 beschrieben ist. Bevorzugte Durchführungsarten dieses Verfahrens weisen mindestens eine der in den Unteransprüchen 18 bis 20 beschriebenen Merkmale auf.

Der Einsatz nach der Erfindung, der mit der Innenwandung eines Durchgangsloches in einem faserverstärkten Formkörper verbunden werden soll, ist also aus einer Mehrzahl von Einsatzteilen aufgebaut, die zusammen die Segmente eines Ringes darstellen und in das besagte Durchgangsloch eingeführt und darin eingebettet oder in anderer Weise befestigt werden müssen. Diese Segmente können mit der Innenwendung des Durchgangsloches durch einfaches mechanisches Einpassen bzw. Eindrücken verbunden werden, vorzugsweise aber unter Verwendung eines Klebemittels, wodurch die Verbindung zwischen den Segmenten und dem faserverstärkten Formkörper verstärkt wird. Ein Klebemittel vom Araldit-Typ, wie es von der Ciba-Geigy AG, CH-4002 Basel vertrieben wird, ist für diesen Zweck besonders geeignet.

Der mehrteilige Einsatz muß in der Mitte einen Durchlaß aufweisen, der vorzugsweise groß genug ist, um einen leichten Einbau der den ringförmigen Einsatz bildenden Segmente zu gestatten. Die äußere Gestalt des Einsatzes ist nicht kritisch für dessen Wirkungsweise und kann derjenigen des Durchgangsloches des faserverstärkten Formkörpers angepaßt sein, in die er eingesetzt werden soll. So kann der aus den Segmenten gebildete Einsatz z.B. kreisförmigen oder polygonalen Querschnitt besitzen.

Die Segmente des Einsatzes können an ihren nach außen gekehrten Wandungsflächen, die gemeinsam die äußere Umfangswandung des Kinsatzes bilden, Eingriffsmittel wie Vorsprünge oder Ausnehmungen aufweisen, die in entsprechende Gegeneingriffsmittel an der Innenwandung des Durchgangsloches des Formkörpers eingreifen, und die entspre chende Ausnehmungen oder Vorsprünge sein können. Vorsprünge wie Nasen, Buckel oder Wülste auf den Einsatzsegmenten und entsprechende Ausnehmungen in der Innenwandung des Durchgangsloches sind bevorzugt, besonders, wenn die Formkörper und/oder die Einsätze als Spritzguß hergestellt werden. Die Vorsprünge können z.B. die Form von Halbkugeln oder trigonalen Pyramiden aufweisen.

Während der Einsatz selbst aus nur zwei Segmenten gleicher oder verschiedener Gestalt gebildet sein kann, so ist es doch vorteilhafter, ihn in mindestens drei Segmente zu teilen, und vorzugsweise besteht er aus mindestens sechs bis zwölf Segmenten. Je größer die Zahl der Segmente, um so umständlicher ist das Einsetzen derselben in das Durchgangsloch des Formkörpers und um so mehr Zeit wird dafür benötigt. Die Verwendung von mehr als zwei Segmenten verursacht eine wirksamere Verteilung der Ermüdungsbelastung und höhere Bruchfestigkeit des Einsatzes. Die Dicke des Einsatzes in axialer Richtung, also parallel mit der Drehachse eines Rotationselements, z.B. einer Welle, die in das mittige Einsatzloch eingesetzt wird, und die Höhe der Segmente in radialer Richtung können beliebig sein, solange sie der Gestalt und Größe des Durchgangsloches im faserverstärkten Formkörper und der Gestalt und Größe des letzteren angepaßt sind. Aus praktischen Gründen sollte die Dicke des Einsatzes vorzugsweise mindestens 0.5 mm und seine Höhe mindestens 1 mm betragen.

Die Gestalt und Abmessungen von auf den nach außen gerichteten Wandflächen der Segmente vorhandenen Vorsprüngen sind ebenfalls nicht kritisch.

Der mehrteilige Einsatz nach der Erfindung wird vorzugsweise aus Material von hoher Druckfestigkeit oder von hoher Härte oder beiden dieser Eigenschaften hergestellt.

Besonders bevorzugt sind Einsatzsegmente aus Metall wie Chrommolybdänstahl, harter nicht-rostender Stahl oder Federstahl, oder auch aus nichtmetallischen Materialien wie Keramik oder harten, faserverstärkten Kunststoff-Formkörpern.

Der eine Komponente des Verbundartikels nach der Erfindung darstellende faserverstärkte Formkörper ist ein Verbundglied aus vorzugsweise hohe Festigkeit und große Härte aufweisendem Kunststoff und aus Fasern wie z.B. Kohlenstoffasern, Borfasern, Glasfasern oder keramischen Fasern.

Als zur Herstellung des faserverstärkten Formkörpers geeignete Kunststoff-komponente werden vorzugsweise Duroplasten oder thermoplastische Kunststoffe verwendet; insbesondere sind Polyamide, Polyester, Polysulfone, Polykarbonate, Polyäthersulfone, Polyphenylensulfide, Polyvinylidenfluoride, Polyätherätherketone oder Epoxyharze ausreichender Druckfestigkeit, Härte und anderer erwünschter mechanischer Eigenschaften bevorzugt.

Da der Einsatz nach der Erfindung selber aus einer Anzahl individueller Segmente aufgebaut ist, besitzt er hohe Stabilität und Festigkeit gegenüber den an ihm angreifenden Ermüdungs-Drehmomenten und weist erheblich verbesserte Bruchfestigkeit auf. Außerdem tritt an den Grenzflächen zwischen dem faserverstärkten Formkörper und den Einsatzelementen keine kritische Wärmebelastung auf und es besteht auch keine Gefahr des Ablösens des Körpers von den Segmenten, da die Aushärtung des faserverstärkten Formkörpers vor dem Einbau der Einsatzsegmente stattfindet.

Weitere Einzelheiten, Zwecke und Vorteile der Erfindung ergeben sich aus der folgenden Beschreibung derselben im Zusammenhang mit der beigefügten Zeichnung, in der

Fig. 1 eine schematische Seitenansicht des Verbundartikels mit einer bevorzugten Ausführungsform eines mehrteiligen Einsatzes nach der Erfindung und

Fig. 2 eine ähnliche Ansicht in größerem Maßstab eines einzelnen Segments des in Fig. 1 gezeigten Einsatzes darstellt.

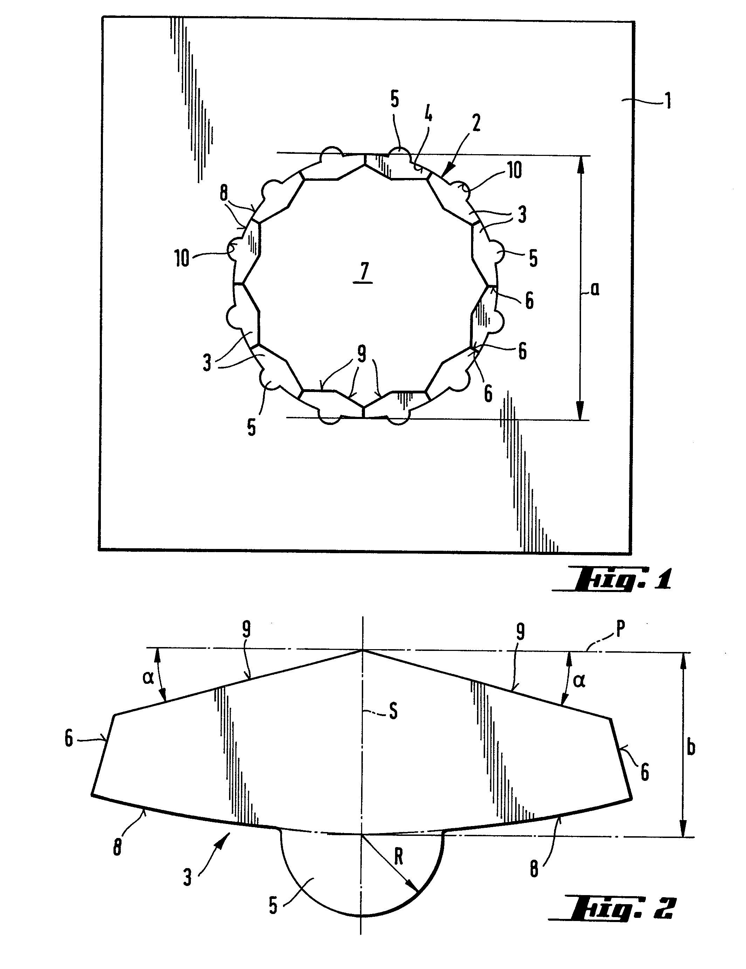

Der in Fig. 1 gezeigte Formkörper 1 hat die Gestalt einer quadratischen Platte und ist aus faserverstärktem Kunststoff mit einem Durchgangsloch 4 geformt, in welchem ein ringförmiger Einsatz 2 untergebracht ist, der sich aus zwölf Segmenten 3 zusammensetzt und einen mittigen, beidseitig offenen Durchlaß 7 längs einer Mittelachse (nicht gezeigt) besitzt. Bei einem solchen erfindungsgemäßen Verbundartikel kann der quadratische Körper 1 z.B. eine Länge von 65 mm und eine Dicke von 14 mm sowie einen Lochdurchmesser a des Durchgangsloches 4 von 32 mm aufweisen.

Der Einsatz 2 kann z.B. aus keramischem Material hergestellt sein und jedes Segment desselben, wie es in Fig. 2 im einzelnen gezeigt ist, kann zwei auswärts gerichtete Wandflächen 8 besitzen, die je einen halbkugelförmigen Vorsprung 5, z.B. mit einem Kugelradius R von 1 mm tragen. Die rückseitigen Flächen 9 des Segments sind einwärts zur Mittelachse S des mittigen Einsatzloches 7 gerichtet und nach außen unter einem Winkel α von 15° gegenüber einer zur Seite s des quadratischen Körpers 1 parallelen Ebene P geneigt. Die Höhe b des Segments 3, die sich senkrecht zur Ebene P erstreckt, kann bei einer Ausführungsform mit den oben angegebenen anderen Abmessungen 2,5 mm betragen, wobei die Höhe des Vorsprungs 5 nicht eingeschlossen ist.

Der faserverstärkte Körper 1 kann eine laminierte Struktur aufweisen und aus in einer Richtung orientierten, vorimprägnierten Fasergelegen (prepregs) von Epoxyharz auf solche Weise erzeugt werden, daß die Richtung der Faserorientierung von Gelege zu Gelege abwechselnd unter einem Winkel von 0° und daraffolgend unter einem Winkel von 90° mit der Seite s des quadratischen Körpers 1 erfolgt (siehe auch die DE-OS 27 10 275, in welcher ähnliche mehrschichtige faserverstärkte Körper aus Epoxyharz und Kohlenstofffasern, allerdings von verschiedener Gestalt beschrieben sind).

Beim Verfahren zur Herstellung des in Figuren 1 und 2 dargestellten Verbundartikels wird zunächst der faserverstärkte Formkörper als quadratische Platte hergestellt, und das Durchgangsloch 4 kann einschließlich der Ausnehmungen oder Nischen 10 in seiner Innenwandung erzeugt werden, welche die Vorsprünge 5 des Einsatzes 2 aufnehmen sollen.

Die Einsatzsegmente 3, die separat hergestellt werden, werden dann nacheinander an geeigneter Stelle in das Durchgangsloch 4 eingefügt, so daß jeder Vorsprung 5 derselben in eine entsprechende Nische 10 hineinpaßt und so, daß die sich radial erstreckenden Flanken 6 benachbarter Segmente 3 einander berühren. Hierdurch verbleiben keine Lücken in der ringförmigen Umfangswandung des Einsatzes, die durch die äußeren Wandflächen 8 aller Segmente 3 gebildet wird.

Die Segmente 3 können auch noch miteinander und/oder mit der Innenwandung des Durchgangsloches 4 stärker verbunden werden, indem auf die Flächen 6 und/oder 5 und 8 jedes der Segmente 3 ein Klebstofffilm aufgebracht wird, den man z.B. wenn kalthärtender Araldit (R) oder dergleichen verwendet wird, zum Aushärten liegen läßt, und der bei Verwendung von wärmehärtbaren Araldit oder dergleichen Klebstoff durch Erwärmen des gesamten Verbundgegenstandes bei einer Temperatur ausgehärtet wird, die niedrig genug ist, um ein Ablösen des Formkörpers von den Segmenten längs der gemeinsamen Grenzflächen zu vermeiden.

Vergleichsversuch.

Das oben beschriebene Ausführungsbeispiel eines Verbundartikels bestimmter Abmessung (Muster A) nach der Erfindung wurde mit einem Verbundartikel (Muster C) verglichen, dessen Teile aus den gleichen Materialien in gleicher Gestalt und mit gleichen Abmessungen wie das Muster A hergestellt wurden, mit dem Unterschied, daß der Einsatz 2 einstückig ausgebildet und nicht in Segmente unterteilt war.

Die beiden Muster wurden in Bezug auf ihr Bruchdrehmoment (breakage torque) und ihre Ermüdungsbruchfestigkeit geprüft. Ihr Bruchdrehmoment wurde durch Einsetzen einer Welle aus nichtrostendem Stahl in den mittigen Durchlaß 7 des Einsatzes 2 bestimmt, wobei der faserverstärkte Formkörper 1 festgehalten und auf die Welle eine Drehkraft ausgeübt wurde. Die Ermüdungsbruchfestigkeit wurde durch die Anzahl der Anwendungen von Belastung bis zum Bruch gemessen.

Ein Lastdrehmoment von 38 kpm wurde wiederholt nacheinander in einer Belastungsrichtung angewandt und die Anzahl der Belastungen bis zum Eintritt des Ermüdungsbruches wurde gemessen. Die Ergebnisse sind in der folgenden Tafel sammengefaßt.

| Muster | Anzahl der Segmente 3 | Anzahl der Vorsprünge 5 | Bruchdreh- moment kpm | Ermüdungs- bruch- festigkeit (mal) |
|---|---|---|---|---|
| A (mehr- teili- ger Ein- satz) | 12 | 12 | 60 | 150 000 |
| C (ein- stücki- ger Ein- satz) | keines | 12 | 40 | 30 000 |

Die obigen Ergebnisse zeigen, daß der Verbundartikel nach der Erfindung (Muster A) ein etwa 50% höheres Bruchdrehmoment aufweist als das Vergleichsmuster C mit nicht unterteiltem Einsatz und daß die Ermüdungsbruchfestigkeit des Musters A fünf mal so groß ist wie diejenige des Musters C.

**Patentansprüche**

1. Einsatz mit mittiger Durchgangsöffnung und ringförmiger Umfangswandung, der zum Einsetzen in ein Durchgangsloch eines faserverstärkten Formkörpers aus Kunststoff geeignet ist,
**dadurch gekennzeichnet,**
daß der Einsatz (2) aus mindestens zwei Segmenten (3) besteht, die zusammengesetzt eine ringförmige Gestalt mit der genannten ringförmigen Umfangswandung bilden.

2. Einsatz nach Anspruch 1, dadurch gekennzeichnet, daß er aus zwei bis zwölf Segmenten (3) besteht, die ringförmig um die besagte mittige Durchgangsöffnung (7) angeordnet sind.

3. Einsatz nach Anspruch 1, dadurch gekennzeichnet, daß jedes der Segmente (3) auf einer nach außen liegenden Segmentwandfläche (8), die einen Teil der genannten ringförmigen Umfangswandung bildet, ein Eingriffselement (5) aufweist, das geeignet ist, mit einem entsprechenden Gegenelement (10) im Inneren des besagten Durchgangsloches (4) des besagten Kunststoffkörpers (1) befestigend zusammenzuwirken.

4. Einsatz nach Ansprüchen 1 bis 3, dadurch gekennzeichnet, daß derselbe aus einem Stahl, einem keramischem Material oder einem hochfesten faserverstärkten Kunststoffmaterial hergestellt ist.

5. Einsatz nach Anspruch 4, dadurch gekennzeichnet, daß derselbe aus Chrommolybdänstahl hergestellt ist.

6. Einsatz nach Anspruch 4, dadurch gekennzeichnet, daß derselbe aus hartem nicht-rostenden Stahl hergestellt ist.

7. Einsatz nach Anspruch 4, dadurch gekennzeichnet, daß derselbe aus Federstahl hergestellt ist.

8. Einsatz nach Anspruch 3, dadurch gekennzeichnet, daß das Eingriffselement (5) ein vorspringendes Teil ist.

9. Einsatz nach Anspruch 3, dadurch gekennzeichnet, daß das Eingriffselement (5) eine halbkugelförmige Erhebung ist.

10. Einsatz nach Anspruch 3, dadurch gekennzeichnet, daß das Eingriffselement (5) ein Vorsprung in form einer trigonalen Pyramide ist.

11. Einsatz nach Anspruch 1, dadurch gekennzeichnet, daß die durch die äußeren Wandflächen (8) aller Segmente gebildete ringförmige Umfangswandung frei von axialen Spalten zwischen den genannten Wandflächen (8) ist.

12. Verbundgegenstand, der gemäß Anspruch 1 umfaßt:

(a) einen aus faserverstärktem Kunststoffmaterial geformten Körper mit einem Durchgangsloch mit Innenwandung und

(b) einen Einsatz mit mittiger Durchgangsöffnung, der fest in das Durchgangsloch des Formkörpers eingefügt ist,

**dadurch gekennzeichnet,**

daß der Einsatz (2) aus mindestens zwei Segementen (3) besteht, von denen jedes eine nach außen gerichtete Segmentwandfläche (8) aufweist und daß alle Segmente (3) so zusammengefügt sind, daß sie eine ringförmige Gestalt mit einer aus den äußeren Wandflächen (8) aller Segmente (3) bestehenden ringförmigen Umfangswandung bilden, die an der Innenwendung des Durchgangsloches (4) des faserverstärkten Formkörpers (1) festsitzt.

13. Verbundgegenstand nach Anspruch 12, dadurch gekennzeichnet, daß der Formkörper (1) aus kohlenstoffaser-verstärktem thermoplastischem Material und der Einsatz (2) aus Stahl, Keramik oder hochfestem, faserverstärktem Kunststoff besteht.

14. Verbundgegenstand nach Anspruch 12, dadurch gekennzeichnet, daß jedes der Segmente (3) auf seiner nach außen gerichteten Wandfläche (8) ein Eingriffselement (5) trägt und daß der Formkörper (1) in der Innenwandung des Durchgangsloches (4) eine entsprechende Anzahl Gegenelemente (10) aufweist, die so angeordnet sind, daß sie mit den Eingriffs elementen (5) zusammenwirken, um den Festsitz der Segmente (3) im Formkörper (1) zu verstärken.

15. Verbundgegenstand nach Anspruch 14, dadurch gekennzeichnet, daß jedes der Eingriffselemente (5) aus einer aus der betreffenden äußeren Segmentwandfläche (8) herausragenden Erhebung besteht und daß die Gegenelemente (10) Ausnehmungen in der Innenwandung des Durchgangsloches (4) des Formkörpers (1) sind, in welches die entsprechenden Erhebungen (5) festsitzend hineinpassen.

16. Verbundgegenstand nach einem der Ansprüche 12 bis 15, dadurch gekennzeichnet, daß zwischen den äußeren Wandungen (8) aller Segmente (3) und der Innenwandung des Durchgangsloches (4) des Formkörpers (1) eine Klebstoffschicht zur Erhöhung des Festsitzens des Einsatzes (2) im Formkörper (1) vorhanden ist.

17. Verfahren zur Herstellung des Verbundartikels nach Anspruch 12, dadurch gekennzeichnet, daß

(1) der Körper (1) aus faserverstärktem Material geformt und gehärtet wird;

(2) die Segmente (3) des aus mindestens zwei derselben bestehenden Einsatzes (2) aus einem Material hoher Druckfestigkeit, großer Härte oder beider dieser Eigenschaften hergestellt wird; und

(3) die Segmente (3) in die Innenwandung des Durchgangsloches (4) eingesetzt werden.

18. Verfahren nach Anspruch 17, dadurch gekennzeichnet, daß zwischen der Innenwandung des Durchgangsloches (4) und den nach außen gerichteten Wandflächen (8) der Segmente (3) eine Klebstoffschicht angebracht und so gehärtet wird, daß die Segmente (3) mit dem Formkörper (1) fest verbunden sind.

19. Verfahren nach Anspruch 17, dadurch gekennzeichnet, daß als faserverstärktes Material Polyamid, Polyester, Polysulfon, Polykarbonat, Polyäthersulfon, Polyphenylensulfid, Polyvinylidenfluorid, Polyätherätherketon oder Epoxidharz verstärkt durch mindestens eine der folgenden Fasern: Kohlenstoffasern, Borfasern, Glasfasern und Keramikfasern, welches Material mindestens eine der genannten Eigenschaften aufweist, verwendet wird.

20. Verfahren nach Anspruch 19, dadurch gekennzeichnet, daß als Material für die Einsatzsegmente (3) einer der folgenden Stähle verwendet wird : Chrommolybdänstahl, harter nicht-rostender Stahl oder Federstahl.

**Fig. 1**

**Fig. 2**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 989 323 (FMC CORP.)<br><br>* Spalte 6, Zeile 14 - Spalte 7, Zeile 5 * | 1,2,12 ,17 | B 29 C 67/18 |
| A |  | 4,11, 13,19 |  |
| A,D | ---<br>COMPOSITES, Band 14, Nr. 1, Januar 1983, Seiten 19-26, Butterworth & Co. Ltd, Guildford, Surrey, GB; A.P. CLULEY et al.: "Jointing of components moulded in carbon fibre-reinforced thermoplastics" | 1,4,6, 12,13, 16-20 |  |
| A,D | ---<br>GB-A- 584 004 (GODFREY) |  |  |
| A,D | ---<br>DE-A-2 710 275 (DASSAULT)<br><br>----- |  |  |

RECHERCHIERTE
SACHGEBIETE (Int. Cl.4)

B 29 C
F 16 C
F 16 L

Der vorliegende Recherchenbericht wurde für alle Patentansprüche erstellt.

| Recherchenort | Abschlußdatum der Recherche | Prüfer |
|---|---|---|
| DEN HAAG | 21-07-1987 | RIS M. |